# EUROPÄISCHE PATENTSCHRIFT

(11) **EP 1 560 671 B1**
(45) Veröffentlichungstag und Bekanntmachung des Hinweises auf die Patenterteilung: **17.08.2005**
(21) Anmeldenummer: 03767794.5
(22) Anmeldetag: 12.12.2003
(51) Int. Cl.: B21K 1/30, B21J 5/12, F16H 55/17, B62D 3/12

(54) **LENKRITZEL**
STEERING PINION
PIGNON DE DIRECTION

(30) Priorität: 21.12.2002 DE 10260426
(43) Veröffentlichungstag der Anmeldung: 10.08.2005
(73) Patentinhaber: THYSSENKRUPP PRÄZISIONSSCHMIEDE GMBH, 80807 München (DE)
(72) Erfinder: GRÖBEL, Christoph, 42853 Remscheid (DE)
(74) Vertreter: Grättinger & Partner (GbR)
(86) Internationale Anmeldenummer: PCT/EP2003/014131
(87) Internationale Veröffentlichungsnummer: WO 2004/056504

(56) Entgegenhaltungen:
- PATENT ABSTRACTS OF JAPAN vol. 1996, no. 03, 29. März 1996 (1996-03-29) -& JP 07 308729 A (JIDOSHA KIKI CO LTD; OTHERS: 01), 28. November 1995 (1995-11-28) in der Anmeldung erwähnt
- PATENT ABSTRACTS OF JAPAN vol. 1999, no. 04, 30. April 1999 (1999-04-30) -& JP 11 010274 A (TOYOTA MOTOR CORP; YAMANAKA GOOKIN:KK), 19. Januar 1999 (1999-01-19) in der Anmeldung erwähnt

## Beschreibung

Die Erfindung betrifft ein durch Kalt- oder Warmumformen verzahnungsfertig hergestelltes Lenkritzel als einteilige Kupplungsverbindung zwischen Lenkwelle und Zahnstange einer Lenkeinrichtung an einem Kraftfahrzeug, wobei das Lenkritzel einen zylindrischen Verzahnungsabschnitt mit einer Schrägverzahnung auf seiner Außenseite und einen achsgleich daran anschließenden zylindrischen Achsabschnitt aufweist, dessen Durchmesser größer ist als der des Verzahnungsabschnitts und dessen Endabschnitt eine Mitnahmevertiefung für den Anschluss der Lenkwelle enthält, und wobei ein Übergangsbereich zwischen dem Fußkreis der Schrägverzahnung und dem Achsabschnitt vorgesehen ist.

Lenkritzel dieser Art sind in JP 7-308729 A und JP 11-10274 A beschrieben, welche zur Steuerung des Materialflusses beim Schmieden eine etwa dreieckförmige Fläche vorsehen, die im Eingangsbereich der Verzahnungsgänge in der Hohlform des Schmiedegesenks angeordnet ist. Diese Dreiecksfläche ist derart schräg gestellt, daß sie den Eingangsbereich erweitert und außerdem den Materialfluß in Drehung versetzt, so daß eine verbesserte Füllung der die Schrägverzahnung ausbildenden Formhohlräume erzielt wird. Im Zusammenhang mit diesen bekannten Lösungsvorschlägen bleibt als Problem unberücksichtigt, daß trotz guter Füllung des Hohlraums für den Verzahnungskörper keine gleichwertige Füllung des Hohlraums für den Achsabschnitt gewährleistet ist, insbesondere dann, wenn eine im Verhältnis zum Außendurchmesser des Achsabschnitts großflächige Mitnahmevertiefung vorgesehen ist.

Demgegenüber liegt der vorliegenden Erfindung die Aufgabe zugrunde, eine derartige Gestaltung des Lenkritzels vorzusehen, daß der entsprechende Hohlraum des beim Umformen eingesetzten Gesenks den Materialfluß in zwei entgegengesetzte Richtungen begünstigt, nämlich einerseits zur Füllung des zylindrischen Verzahnungsabschnitts und andererseits des daran achsgleich anschließenden Achsabschnitts des Lenkritzels.

Durch welche Formgebung des Lenkritzels diese Aufgabe gelöst wird, ergibt sich aus dem Kennzeichen von Patentanspruch 1 der vorliegenden Erfindung. Danach ist vorgesehen, daß der Übergangsbereich zwischen dem Fußkreis der Schrägverzahnung und dem im Durchmesser größeren Achsabschnitt wenigstens zwei Konusabschnitte umfaßt, nämlich einen radial äußeren Konusabschnitt mit einem ersten Konuswinkel α₁ (Stauwinkel), der sich zwischen dem Kopfkreis-Durchmesser am Verzahnungsende der Schrägverzahnung und dem Achsabschnitt erstreckt, und einen radial inneren Konusabschnitt mit einem zweiten Konuswinkel α₂ (Einlaufwinkel), der sich zwischen dem Kopfkreis-Durchmesser am Verzahnungsende und dem Fußkreis der Schrägverzahnung erstreckt, daß der Stauwinkel α₁ größer dem Einlaufwinkel α₂ ist und daß der Übergangsbereich wenigstens einen Rundungsabschnitt mit einem ersten Radius R1 beschreibt, der vom äußeren Konusabschnitt zur zylindrischen Mantelfläche des Achsabschnitts überleitet.

Durch eine derartige Ausbildung des Lenkritzels wird bei dessen Umformen erreicht, daß der Fließwiderstand durch geeignete Wahl von Stauwinkel α₁ und Einlaufwinkel α₂ derart gesteuert werden kann, daß eine vollständige Füllung des Gesenkhohlraums gewährleistet ist. Bei Anwendung der erfindungsgemäßen Lehre läßt sich der Widerstand beim Anpressen derart einstellen, daß das Material des Rohlings in aufeinander abgestimmter Weise in beide einander entgegengesetzten Richtungen fließt. Dabei ist bevorzugt anzustreben, daß bei vollständigem Füllen des Achsabschnitts die langgestreckten Gewindegänge der Schrägverzahnung im Bereich des Verzahnungsabschnitts gleichfalls vollständig ausgefüllt werden. Eine wichtige Erkenntnis im Rahmen der vorliegenden Erfindung besteht darin, daß durch eine geeignete Wahl des Eintrittswiderstands in den Verzahnungsabschnitt das Material unter Erzeugung eines ausreichenden Gegendrucks in die Gegenrichtung gepreßt wird. Dadurch kann eine einwandfreie Füllung des Achsabschnitts auch bei relativ groß dimensionierter Mitnahmevertiefung erzielt werden.

Nach einem erfindungsgemäßen Vorschlag ist vorgesehen, daß der Stauwinkel α₁ abhängig vom Querschnitt der Mitnahmevertiefung derart bestimmt wird, daß er entsprechend der Abmessung des Querschnitts der Mitnahmevertiefung, bezogen auf den Außendurchmesser des Achsabschnitts, gleichlaufend zu- bzw. abnimmt. Nimmt also das Querschnittsverhältnis zwischen Mitnahmevertiefung und Achsabschnitt zu, so ist vorzugsweise ein entsprechend größerer Stauwinkel α₁ zu wählen.

Für die Bemessung des Einlaufwinkels α₂ ist erfindungsgemäß vorgesehen, daß dieser abhängig vom Spiralwinkel β der Schrägverzahnung derart bestimmt wird, daß er zu einer Winkelveränderung des Spiralwinkels β entgegenlaufend zu- bzw. abnimmt. Damit wird der Einfluß des Spiralwinkels β auf den Fließwiderstand ausgeglichen, so daß die Möglichkeit besteht, den Materialfluß in Richtung Verzahnung und entgegengesetzt in Richtung Achsabschnitt aufeinander abzustimmen.

Im Rahmen der Erfindung können neben dem äußeren Konusabschnitt und dem inneren Konusabschnitt sowie dem Rundungsabschnitt mit einem ersten Radius R1 noch weitere Rundungsabschnitte vorgesehen sein, so daß fließende Übergänge für einen stetigen Materialfluß gewährleistet sind. In diesem Sinne ist bevorzugt ein Rundungsabschnitt mit einem zweiten Radius R2 vorgesehen, der den Übergang zwischen dem äußeren und dem inneren Konusabschnitt bildet. Ferner kann ein weiterer Rundungsabschnitt mit einem dritten Radius R3 vorgesehen sein, der vom inneren Konusabschnitt zum Fußkreis der Schrägverzahnung überleitet. Auf diese Weise entsteht quasi ein Übergangsbereich mit einem Wendepunkt in Höhe des Kopfkreisdurchmessers am Verzahnungsende, vorausgesetzt der Einlaufwinkel α₂ ist kleiner als der Stauwinkel α₁. Ausgehend von der der erfindungsgemäßen Lehre zugrunde liegenden Regel α₁ > α₂ ergibt sich, daß die Radien R1 und R2 gegensätzlich gekrümmt sind. Radius R3 stimmt mit Radius R2 in der Krümmungsrichtung überein. Für Radius R3 gilt also das gleiche wie für Radius R2 in Bezug auf R1, das heißt die Radien R1 und R3 sind entgegengesetzt gekrümmt.

Für den Fachmann versteht sich von selbst, daß sich aus der nach den Patentansprüchen gemäß der vorliegenden Erfindung definierten Form des Lenkritzels automatisch eine entsprechende Hohlform des Gesenks für den Umformvorgang ergibt. Anstelle des Kaltfließpressens kann die Umformung auch durch Schmieden erfolgen.

Im folgenden wird ein erfindungsgemäßes Lenkritzel anhand der Zeichnung beschrieben. Es zeigt
- Fig. 1: das Lenkritzel in dreidimensionaler Darstellung,
- Fig. 2: eine Seitenansicht des Lenkritzels, teilweise geschnitten,
- Fig. 3: einen Querschnitt III-III gemäß Fig. 2 mit einer Mitnahmevertiefung in Form eines Zwei-Flach-Profils,
- Fig. 3a: eine Variante zu Fig. 3 mit einer Mitnahmevertiefung in Form eines Sechskantprofils,
- Fig. 3b: eine Variante zu Fig. 3 mit einer Mitnahmevertiefung in Form einer Keilverzahnung,
- Fig. 4: eine schematische Darstellung des Übergangsbereichs zwischen Achsabschnitt und Verzahnungsabschnitt und
- Fig. 5: eine vergrößerte Seitenansicht in perspektivischer Darstellung.

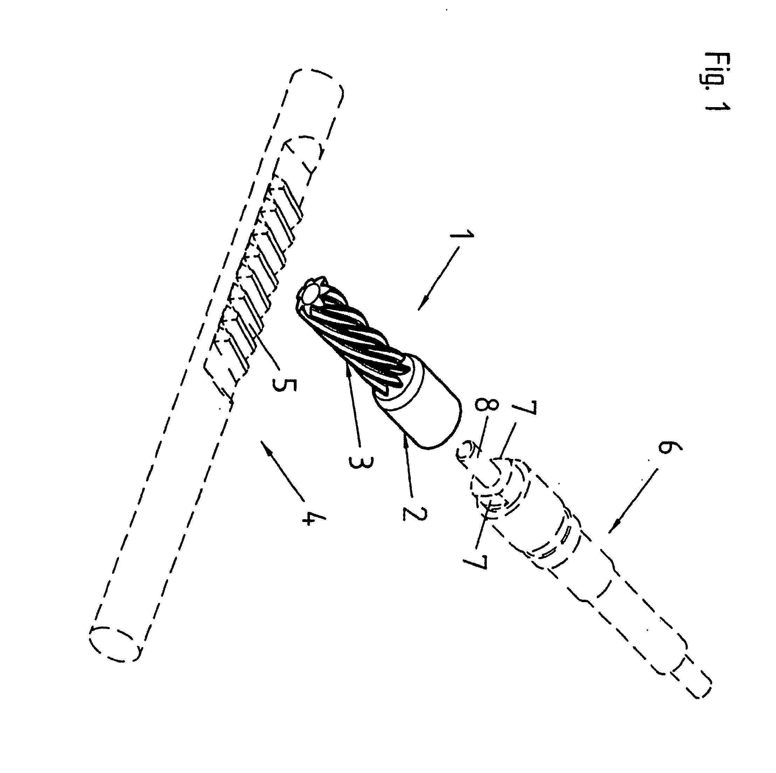

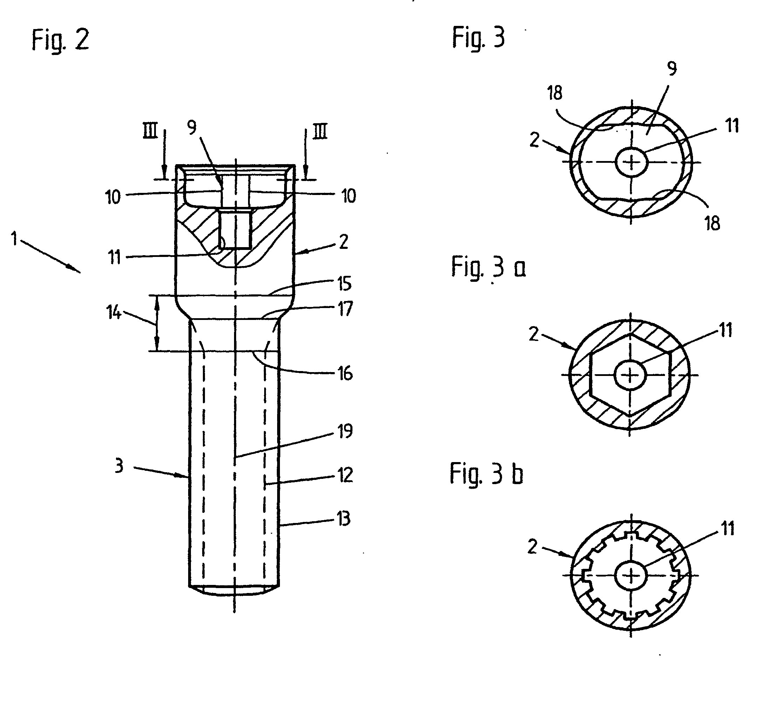

Fig. 1 zeigt ein erfindungsgemäßes Lenkritzel 1 in dreidimensionaler Darstellung. Es besitzt einen zylindrischen Achsabschnitt 2 und in dessen achsgleicher Verlängerung einen ebenfalls zylindrischen Verzahnungsabschnitt 3 mit einer Spiral- bzw. Schrägverzahnung, die sich über seine gesamte Länge erstreckt. Dem Lenkritzel 1 ist eine strichliert dargestellte Zahnstange 4 für eine Lenkung in einem Kraftfahrzeug zugeordnet, welche eine Verzahnungsstrecke 5 aufweist. Bei einer fertigen Lenkung greift die Schrägverzahnung des Lenkritzels 1 in die Zahnstange 4 ein und verschiebt diese entsprechend dem Lenkeinschlag, welcher über die Lenksäule des Kraftfahrzeugs auf eine strichliert dargestellte Lenkwelle 6 übertragen wird. Die Lenkwelle 6 besitzt an ihrem dem Lenkritzel 1 zugewandten Ende zwei einander gegenüberliegende Abflachungen 7, welche Schlüsselflächen für die Kupplung mit einer in Fig. 1 nicht sichtbaren, jedoch in den Figuren 2 und 3 der Zeichnung gezeigten Mitnahmevertiefung 9 in dem der Lenkwelle zugewandten Ende des Achsabschnitts 2 bilden. Außerdem besitzt die Lenkwelle 6 an ihrem Kupplungsende einen zylindrischen Zentrieransatz 8, der in eine entsprechende Bohrung 11 (Fig. 2) im Zentrum der Mitnahmevertiefung 9 (Fig. 2) eintritt. Die Bohrung 11 kann entweder durch Umformen oder nachfolgende spanende Bearbeitung eingebracht werden.

In der Seitenansicht gem. Fig. 2 ist im Bereich des Achsabschnitts 2 die Mitnahmevertiefung 9 dargestellt. Man erkennt eine flache Anlagefläche 18 (Fig. 3) anhand der Begrenzungslinien 10, an welcher die Schlüsselflächen 7 der Lenkwelle 6 nahezu spielfrei anliegen, sowie eine Bohrung 11 zur Aufnahme des Zentrieransalzes 8 der Lenkwelle 6. Die Schrägverzahnung des Verzahnungsabschnitts 3 des Lenkritzels 1 ist in der üblichen Form schematisch dargestellt, wobei die strichlierte Linie 12 dem Fußkreis der Verzahnung und die Umrißlinie 13 deren Kopfkreis entspricht. Am inneren Ende des Verzahnungsabschnitts 3 ist der Übergangsbereich 14 zwischen dem zylindrischen Teil des Achsabschnitts 2 und dem Verzahnungsabschnitt 3 zwischen den Linien 15 und 16 angegeben, ebenso die Umlauflinie 17, welche das Verzahnungsende bezeichnet.

Fig. 3 entspricht der Schnittebene III - III in Fig. 2. Man erkennt die verhältnismäßig große, ohne Strichlierung wiedergegebene Querschnittsfläche der Mitnahmevertiefung 9, die Anlageflächen 18 für die seitlichen Schlüsselflächen 7 der Lenkwelle 6 sowie die zentrale Bohrung 11.

Die Figuren 3a, 3b zeigen Alternativen zu Fig. 3, nämlich gemäß Fig. 3a eine Mitnahmevertiefung, deren Schlüsselflächen durch ein Sechskantprofil gebildet sind und gemäß Fig. 3b eine Mitnahmevertiefung, welche in Art einer Innen-Keilverzahnung ausgebildet ist.

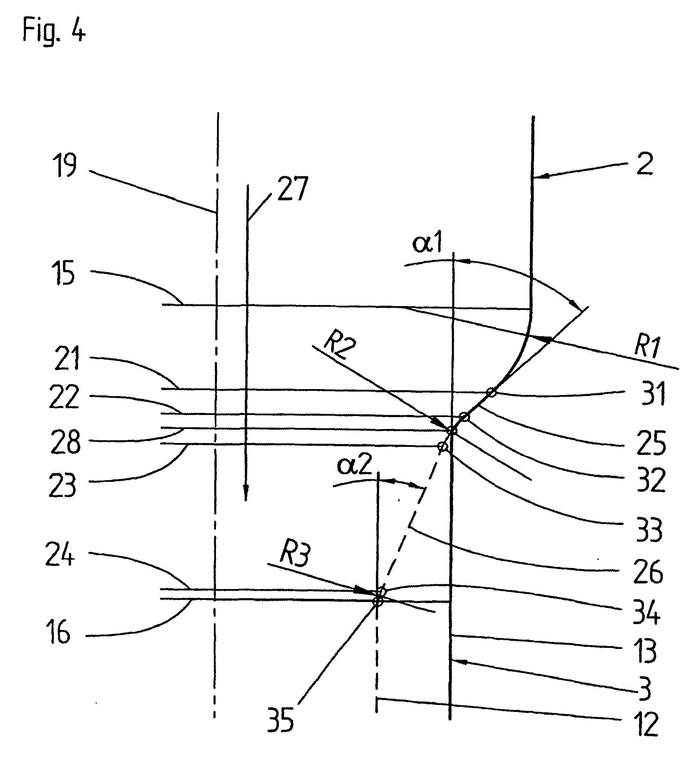

Fig. 4 verdeutlicht schematisch den erfindungsgemäßen Lösungsansatz. Es handelt sich um eine Darstellung des Lenkritzels 1 im Übergangsbereich 14 als hälftiger Schnitt durch die Längsachse 19. Um den Bezug zu Fig. 2 herzustellen, sind die Grenzen des Übergangsbereichs 14 gemäß der oberen Linie 15 und der unteren Linie 16 dargestellt. Die Höhe der oberen Linie 15 ergibt sich durch den Übergang zwischen dem Radius R1 zum zylindrischen Mantel des Achsabschnitts 2. Die untere Grenzlinie 16 ergibt sich durch den Übergang des Radius R3 auf den Fußkreisdurchmesser 12. Eingezeichnet ist ferner die dem Kopfkreisdurchmesser der Verzahnung entsprechende Umrißlinie 13 des Verzahnungsabschnitts 3. Im folgenden soll die Bedeutung von vier weiteren horizontalen Linien 21 bis 24 erläutert werden, welche parallel zu den Begrenzungslinien 15, 16 des Übergangsbereichs 14, nämlich innerhalb derselben, verlaufen. Sie dienen der detaillierten Beschreibung des Übergangsbereichs, wie er in Patentanspruch 1 definiert ist.

Linie 21 erzeugt mit der Kontur des Übergangsbereiches einen Verschneidungspunkt 31 im Übergang zwischen der Krümmung gem. Radius R1 und einem radial äußeren Konusabschnitt 25, dessen Konuswinkel als Stauwinkel α₁ bezeichnet ist. Die Höhe der Linie 22 ergibt sich aus dem Verschneidungspunkt 32 zwischen dem inneren Ende des äußeren Konusabschnitts 25 und dem Radius R2, der durch die Umrißlinie 13 entsprechend dem Kopfkreisdurchmesser des Verzahnungsabschnitts 3 verläuft und den Übergang zu einem radial inneren Konusabschnitt 26 bildet. Der Verschneidungspunkt 33 zwischen dem Radius R2 und dem radial inneren Konusabschnitt 26 definiert die Höhe der Linie 23. Das radial innere Ende des inneren Konusabschnitts 26 ist markiert durch den Verschneidungspunkt 34 mit der Linie 24. Vom Verschneidungspunkt 34 aus bildet Radius R3, welcher mit Radius R2 gleichartig gekrümmt ist, den Übergang zur Umrißlinie 12, welche dem Fußkreisdurchmesser der Verzahnung entspricht. Die Linie 16, welche den Übergangsbereich 14 innerhalb des Verzahnungsabschnitts 3 begrenzt, erzeugt mit der Umrißlinie 12 den Verschneidungspunkt 35, welcher den Endpunkt der Kontur des Übergangsbereiches 14 bildet.

Auf diese Weise ist ein Übergangsbereich 14, bestehend aus zwei Konusabschnitten 25, 26 und drei Radien R1, R2, R3 definiert. Wesentlich ist dabei nur der Radius R1, welcher den großen Durchmessersprung zwischen Achsabschnitt 2 und Verzahnungsabschnitt 3 überbrückt. Es ist durchaus vorstellbar, dass auf die Radien R2 und R3 verzichtet wird, insbesondere dann, wenn Stauwinkel α₁ und Einlaufwinkel α₂ sich nicht stark voneinander unterscheiden. Für diesen Fall wandern die Verschneidungspunkte 32 und 33 übereinander, so daß sie auf der Umrißlinie 13 entsprechend dem Kopfkreis 13 der Verzahnung zu liegen kommen und der Verschneidungspunkt 34 wandert über den Verschneidungspunkt 35 auf die benachbarte Begrenzungslinie 16 des Übergangsbereichs 14.

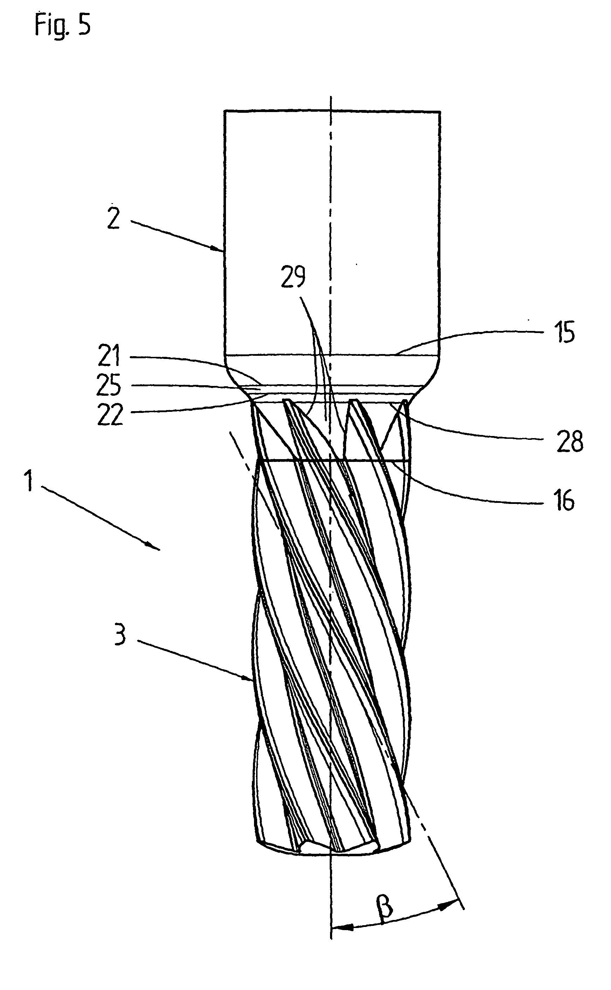

Wenn man von einer Fließrichtung des Materials beim Kaltpressen in Richtung des Pfeiles 27 zum Füllen des Verzahnungsabschnitts 3 ausgeht, so bedeutet der äußere Konusabschnitt 25 einen erhöhten Eintrittswiderstand, je größer der Stauwinkel α₁ gewählt wird. Erst wenn dieser Widerstandsbereich überwunden wird, bestimmt der kleinere Einlaufwinkel α₂ den weiteren Fließwiderstand des Materials beim Auffüllen der die Spiralverzahnung bildenden Hohlform. Je kleiner der Einlaufwinkel α₂ gewählt wird, desto rascher füllt sich der Verzahnungsabschnitt 3. Allerdings muß hier beachtet werden, daß der Einlaufwinkel α₂ vom Spiralwinkel β der Schrägverzahnung (siehe Fig. 5) abhängt, und zwar in der Weise, daß der Einlaufwinkel α₂ zu einer Winkelveränderung des Spiralwinkels β entgegenlaufend zu- bzw. abnimmt. Dabei wird eine Vergrößerung des Spiralwinkels β aufgefangen durch einen kleineren Einlaufwinkel α₂, wodurch sich der Einlaufwiderstand verringert, und umgekehrt.

Fig. 5 zeigt in vergrößerter Darstellung die Spiralverzahnung im Bereich des Verzahnungsabschnitts 3 mit Angabe des Spiralwinkels β. Die Linien 15 und 16 begrenzen den Übergangsbereich 14 gem. der zu den Fig. 2 und 4 erläuterten Definition. Linie 28 bezeichnet das dem Achsabschnitt 2 zugewandte Ende der Schrägverzahnung. Zwischen den Linien 21 und 22 verläuft der radial äußere Konusabschnitt 25.

Der Ausbildung der Hohlform des Gesenks im Eingangsbereich des Verzahnungsabschnitts 3 entspricht die etwa dreieckförmige Fläche 29, welche dem radial inneren Konusabschnitt 26 entspricht, dessen Neigung durch den Einlaufwinkel α₂ bestimmt ist. Diese Dreieckform 29 bildet die Überleitung des Einlaufbereichs auf die eigentliche Spiralverzahnung.

## Patentansprüche

1. Durch Kalt- oder Warmumformen verzahnungsfertig hergestelltes Lenkritzel (1) als einteilige Kupplungsverbindung zwischen Lenkwelle (6) und Zahnstange (4) einer Lenkeinrichtung an einem Kraftfahrzeug, wobei das Lenkritzel (1) einen zylindrischen Verzahnungsabschnitt (3) mit einer Schrägverzahnung auf seiner Außenseite und einen achsgleich daran anschließenden zylindrischen Achsabschnitt (2) aufweist, dessen Durchmesser größer ist als der des Verzahnungsabschnitts (3) und dessen Endabschnitt eine Mitnahmevertiefung (9) für den Anschluß der Lenkwelle (6) enthält, und wobei ein Übergangsbereich (14) zwischen dem Fußkreis (12) der Schrägverzahnung und dem Achsabschnitt (2) vorgesehen ist,
**dadurch gekennzeichnet,**
**daß** der Übergangsbereich (14) wenigstens zwei Konusabschnitte umfaßt, nämlich einen radial äußeren Konusabschnitt (25) mit einem ersten Konuswinkel (α₁), der sich zwischen dem Kopfkreisdurchmesser (13) am Verzahnungsende der Schrägverzahnung und dem Achsabschnitt (2) befindet, und einen radial inneren Konusabschnitt (26) mit einem zweiten Konuswinkel (α₂), der sich zwischen dem Kopfkreisdurchmesser (13) am Verzahnungsende und dem Fußkreis (12) der Schrägverzahnung befindet, daß der erste Konuswinkel (α₁) größer als der zweite Konuswinkel (α₂) ist und daß der Übergangsbereich (14) wenigstens einen Rundungsabschnitt mit einem ersten Radius (R1) beschreibt, der vom äußeren Konusabschnitt (25) zur zylindrischen Mantelfläche des Achsabschnitts (2) überleitet.

2. Lenkritzel nach Anspruch 1,
**dadurch gekennzeichnet,**
**daß** der erste Konuswinkel (α₁) abhängig vom Hohlquerschnitt der Mitnahmevertiefung (9) derart bestimmt wird, daß er (α₁) entsprechend der Abmessung des Querschnitts, bezogen auf den Außendurchmesser des Achsabschnitts (2) gleichlaufend zu- bzw. abnimmt.

3. Lenkritzel nach Anspruch 1,
**dadurch gekennzeichnet,**
**daß** der zweite Konuswinkel (α₂) abhängig vom Spiralwinkel (β) der Schrägverzahnung derart bestimmt wird, daß er (α₂) zu einer Winkelveränderung des Spiralwinkels entgegenlaufend zu- bzw. abnimmt.

4. Lenkritzel nach Anspruch 1,
**dadurch gekennzeichnet,**
**daß** der Übergangsbereich (14) einen Rundungsabschnitt mit einem zweiten Radius (R2) beschreibt, der den Übergang zwischen dem äußeren (25) und dem inneren Konusabschnitt (26) bildet.

5. Lenkritzel nach Anspruch 1,
**dadurch gekennzeichnet,**
**daß** der Übergangsbereich (14) einen Rundungsabschnitt mit einem dritten Radius (R3) beschreibt, der vom inneren Konusabschnitt (26) zum Fußkreis (12) der Schrägverzahnung überleitet.

## Claims

1. Steering pinion (1) formed complete with teeth by cold or warm forming as a single-component coupling connection between steering shaft (6) and tooth shaft (4) of a steering system in a motor vehicle, whereby the steering pinion (1) incorporates a cylindrical tooth section (3) with a diagonal tooth profile on its outside, and an axle-identical subsequent cylindrical axle section (2), whose diameter is greater than that of the tooth section (3), and whose end section incorporates a follower recess (9) for the connection of the steering shaft (6), and whereby a transition area (14) is envisaged between the floor circle (12) of the diagonal tooth profile and the axle section (2), **characterised in that** the transition area (14) incorporates at least two cone sections, namely a radial outer cone section (25) with a first cone angle (α₁) which is located between the head circle diameter (13) on the tooth end of the diagonal tooth profile and the axle section (2), and a radial inner cone section (26) with a second cone angle (α₂) which is located between the head circle diameter (13) on the tooth end and the floor circle (12) of the diagonal tooth profile, and **in that** the first cone angle (α₁) is larger than the second cone angle (α₂), and **in that** the transition area (14) describes at least one rounding section with a first radius (R1) which leads from the outer cone section (25) to the cylindrical sleeve surface of the axle section (2).

2. Steering pinion according to Claim 1, **characterised in that** the first cone angle (α₁) is defined depending on the hollow cross-section of the follower recess (9) in such a way that the same (α₁) increases, i.e. decreases according to the dimension of the cross-section in relation to the outer diameter of the axle section (2).

3. Steering pinion according to Claim 1, **characterised in that** the second cone angle (α₂) is defined depending on the spiral angle (β) of the diagonal tooth profile in such a way that the same (α₂) increases, i.e. decreases against an angle change of the spiral angle.

4. Steering pinion according to Claim 1, **characterised in that** the transition area (14) describes a rounding section with a second radius (R2), which forms the transition between the outer (25) and the inner cone section (26).

5. Steering pinion according to Claim 1, **characterised in that** the transition area (14) describes a rounding section with a third radius (R3) which leads from the inner cone section (26) to the floor circle (12) of the diagonal tooth profile.

## Revendications

1. Pignon de direction (1) réalisé par formage à froid ou à chaud, de manière à être prêt à s'engrener, servant de liaison d'accouplement entre l'arbre de direction (6) et la crémaillère (4) d'un dispositif de direction d'un véhicule automobile, le pignon de direction (1) présentant un segment denté (3) cylindrique, avec une denture hélicoïdale sur sa face extérieure, ainsi qu'un segment formant axe (2) cylindrique qui fait suite de façon coaxiale au segment denté et dont le diamètre est supérieur à celui du segment denté (3) et dont la portion d'extrémité comporte une cavité d'entraînement (9) pour le raccordement de l'arbre de direction (6), et une zone de transition (14) étant prévue entre le cercle de pied (12) de la denture hélicoïdale et le segment formant axe (2), **caractérisé en ce que** la zone de transition (14) comprend au moins deux portions coniques, à savoir une portion conique (25) radialement extérieure, avec un premier angle de cône (α₁), située entre le diamètre de tête (13) côté extrémité de denture de la denture hélicoïdale et le segment formant axe (2), et une portion conique (26) radialement intérieure, avec un deuxième angle de cône (α₂), située entre le diamètre de tête (13) côté extrémité de denture et le cercle de pied (12) de la denture hélicoïdale, **en ce que** le premier angle de cône (α₁) est supérieur au deuxième angle de cône (α₂) et **en ce que** la zone de transition (14) définit au moins une portion arrondie avec un premier rayon (R1), qui forme la transition entre la portion conique extérieure (25) et la surface enveloppe cylindrique du segment formant axe (2)

2. Pignon de direction selon la revendication 1, **caractérisé en ce que** le premier angle de cône (α₁) est déterminé en fonction de la section creuse de la cavité d'entraînement (9), de manière telle que, en fonction de la dimension de la section, ledit angle (α₁) augmente ou diminue dans le même sens, rapporté au diamètre extérieur du segment formant axe (2).

3. Pignon de direction selon la revendication 1, **caractérisé en ce que** le deuxième angle de cône (α₂) est déterminé en fonction de l'angle d'hélice (β) de la denture hélicoïdale, de manière telle qu'il (α₂) augmente ou diminue dans le sens opposé à une variation de l'angle d'hélice.

4. Pignon de direction selon la revendication 1, **caractérisé en ce que** la zone de transition (14) définit une portion arrondie avec un deuxième rayon (R2), qui forme la transition entre la portion conique extérieure (25) et la portion conique intérieure (26).

5. Pignon de direction selon la revendication 1, **caractérisé en ce que** la zone de transition (14) définit une portion arrondie avec un troisième rayon (R3), qui forme la transition entre la portion conique intérieure (26) et le cercle de pied (12) de la denture hélicoïdale.
